# EUROPEAN PATENT APPLICATION

(11) **EP 4 528 423 A1**
(43) Date of publication of application: **26.03.2025**
(21) Application number: 24199787.3
(22) Date of filing: 11.09.2024
(51) Int. Cl.: G06F 1/16, G06F 3/02, H01H 13/705

(54) **KEY INPUT DEVICE**

(30) Priority: 25.09.2023 JP 2023159324
(71) Applicant: Casio Computer Co., Ltd., Tokyo 151-8543 (JP)
(72) Inventor: Mori, Masaki, Hamura-shi, Tokyo, 205-8555 (JP)
(74) Representative: Grünecker Patent- und Rechtsanwälte PartG mbB

(57) **Abstract**

A key input device includes: a key (14); a member (10, 20) having a hole (101) through which the key (14) is movably inserted; and wall parts (130) separate from each other and extending from an edge of the hole (101) in a direction perpendicular to a board (40) of the device.

## Description

### TECHNICAL FIELD

The present disclosure relates to a key input device.

### DESCRIPTION OF RELATED ART

There is known a key input device that has key tops arranged on a surface. For example, JP1998-207594A discloses a keyboard of a pressing structure that includes key tops, sliders, dome springs, and housings. Each slider is provided on the cylindrical inner wall of the key top and allows the key top to slide along the housing. Each dome spring receives the key top and shows a positive or negative snap characteristic. The housing houses the key top and the dome spring.

### SUMMARY OF INVENTION

According to an aspect of the present disclosure, there is provided a key input device including: a key; a member having a hole through which the key is movably inserted; and wall parts separate from each other and extending from an edge of the hole in a direction perpendicular to a board of the device.

### BRIEF DESCRIPTION OF THE DRAWINGS

The accompanying drawings are not intended as a definition of the limits of the invention but illustrate embodiments of the invention, and together with the general description given above and the detailed description of the embodiments given below, serve to explain the principles of the invention, wherein:
FIG.1 is a plan view of a calculator according to an embodiment of the present disclosure;
FIG.2 is a cross-sectional view of the calculator along the II-II line in FIG.1;
FIG.3 is a cross-sectional view of the calculator along the III-III line in fIG.1;
FIG.4 is an enlarged cross-sectional view of a key in FIG.2;
FIG.5 is a view of the back of a top casing; and
FIG.6 is an enlarged perspective view of the region VI on the back side of the top casing.

### DETAILED DESCRIPTION

Hereinafter, an embodiment of the present disclosure is described in detail with reference to the figures. The scope of the present disclosure is not limited to the illustrated examples.

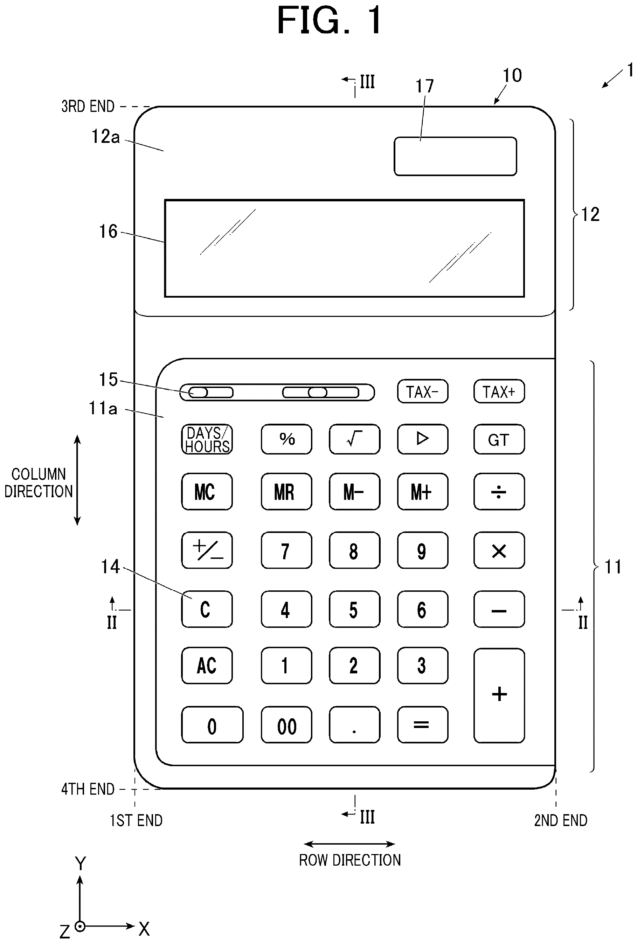

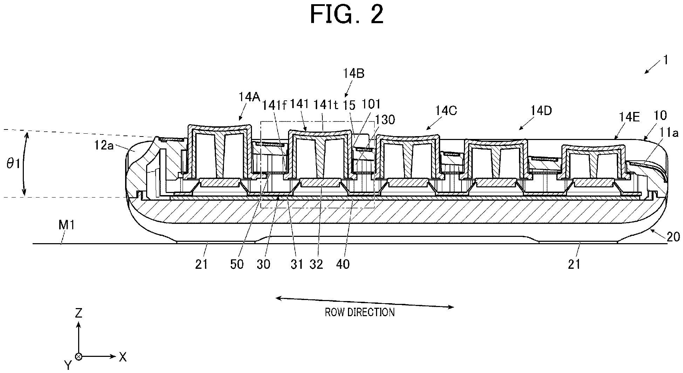

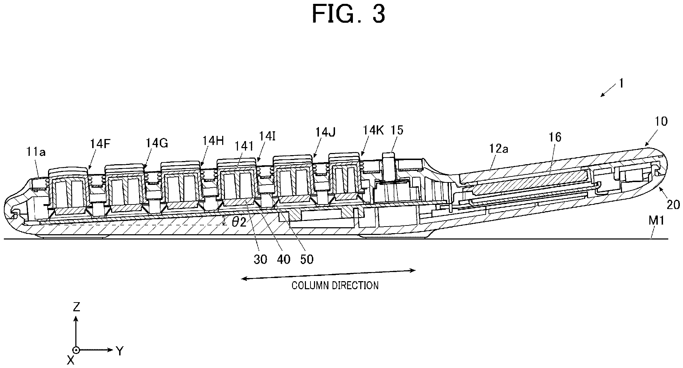

First, the overall configuration of a calculator (electronic desk calculator) 1 as an electronic device in this embodiment is described with reference to FIG.1 to FIG.4. FIG.1 is a plan view of the calculator 1 in this embodiment. FIG.2 is a cross-sectional view of the calculator 1 along the II-II line in FIG.1. FIG.3 is a cross-sectional view of the calculator 1 along the III-III line in FIG.1.

The calculator 1 is a small calculator that receives key inputs by a user and performs calculations with an internal electronic circuit. The calculator 1 in this embodiment has keytops the heights of which slope stepwise in the lateral direction when viewed by the user. The calculator 1 is thus designed such that the key tops fit the dominant hand and fingers of the user. The components of the calculator 1 related to key inputs constitute a key input device.

As shown in FIG.1 to FIG.3, the calculator 1 includes a top casing 10 and a bottom casing 20 as a casing (member) and is placed on a placement surface M1 of a table, for example. In FIG.1 to FIG.3, three-dimensional axes of X, Y, and Z are shown. The +Z direction is the vertical upward direction with respect to the placement surface M1. The placement surface M1 is a two-dimensional XY surface. On the placement surface M1, the X-axis corresponds to the lateral direction (short-side direction) of the calculator 1, and the Y-axis corresponds to the longitudinal direction (long-side direction) of the calculator 1.

The top casing 10 is the upper side (+Z direction side) of the calculator 1 and is made of resin, for example. The top casing 10 of the calculator 1 includes a key input section 11 and a display section 12. The key input section 11 includes multiple keys 14 and a selector switch 15.

The keys 14 include numeric keys, operation keys, and function keys, for example. The numeric keys include keys for inputting numbers [00], [0] to [09] and for inputting the decimal point [.], for example. The operation keys include keys to be used in four basic arithmetic operations, such as keys for inputting operators of [+] (addition), [-] (subtraction), [×] (multiplication), and [÷] (division) and a key for inputting [=] (execution of operation), for example. The function keys include an all-clear key [AC], a clear key [C], memory keys [MC], [MR], [M-], and [M+], a square-root key [V], and a percentage key [%], for example.

The selector switch 15 is a slide switch that includes a rounding selector and a decimal selector, for example. The rounding selector is a switch for specifying how to calculate numbers below the decimal point. The decimal selector is a switch for specifying the digits below the decimal point.

As shown in FIG.1, the exterior of the calculator 1 has a substantially rectangular shape when viewed from the top surface (+Z direction side). The key input section 11 is provided on the -Y direction side of the top casing 10 when the calculator 1 is viewed from the top surface. The display section 12 is provided on the +Y direction side of the top casing 10.

The display section 12 includes a display 16 and a solar panel 17 on the casing surface 12a. The casing surface 12a is a region on the +Y direction side of the top surface of the casing. The display 16 is provided on the -Y direction side of the casing surface 12a. The display 16 has an oblong rectangular display screen, for example. The long side of the display screen of the display 16 extends from the first end side (the end of the casing in the -X direction) to the second end side (the end of the casing in the +X direction) opposite the first end. The solar panel 17 is provided on the +Y direction side of the casing surface 12a. The solar panel 17 is an electronic component that converts light energy into electric energy (power) by using the photovoltaic effect.

The key input section 11 includes the keys 14 on the casing surface 11a. The casing surface 11a is a region on the -Y direction side of the top surface of the casing. In the key input section 11, the keys 14 are arranged substantially in a matrix from the first end side toward the second end side of the casing and from the third end side (the end of the casing in the +Y direction) toward the fourth end side (the end of the casing in the -Y direction) . The keys 14 each include a key top 141. The key top 141 has a touch surface 141t at the top surface of the key top 141. The touch surface 141t is a surface to be pressed by a finger of the user for key input. Among the keys 14, the direction parallel to the upper side/lower side of the key input section 11 is referred to as the row direction (FIG.1, FIG.2), and the direction parallel to the left side/right side of the key input section 11 is referred to as the column direction (FIG.1, FIG.3), for example. The keys 14 are arranged at predetermined intervals (key pitches) in the row direction and in the column direction.

As shown in FIG.2 and FIG.3, the bottom casing 20 is fitted to the top casing 10 from the bottom side (the -Z direction side) and has feet 21. The bottom casing 20 is made of resin, for example. The bottom surface of the bottom casing 20 except the feet 21 (the casing bottom surface) is formed to be parallel to the placement surface M1. The feet 21 are made of an elastic body, such as rubber. The feet 21 are in contact with the placement surface M1 when the calculator 1 is placed on the placement surface M1. The feet 21 prevent the placed calculator 1 from slipping and muffle noise when the calculator 1 is placed.

As shown in FIG.2, the casing surface 11a of the key input section 11 is at a predetermined angle Θ1 to the casing bottom surface (the placement surface M1, a board 40 to be described later) in the row direction from the second end side to the first end side. As shown in FIG.3, the casing surface 11a is at a predetermined angle θ2 to the casing bottom surface (the placement surface M1) in the column direction from the fourth end side to the third end side.

It is preferable that the angle θ1 be in the range of 1° to 9°, for example. It is more preferable that the angle Θ1 be in the range of 1° to 3°. The angle Θ1 is set to 3°, for example. The angle θ2 is set to 3°, for example.

As shown in FIG.2, the height of the casing surface 11a of the key input section 11 from the placement surface M1 (board 40) decreases from the first end side toward the second end side. Thus, the casing surface 11a of the key input section 11 of the calculator 1 slopes to the right. The heights of the touch surfaces 141t of the keys 14 from the casing surface 11a in the +Z direction are substantially uniform. That is, the height of at least part of the touch surfaces 141t of the keys 14 on the first end side is higher than the height of at least part of the touch surfaces 141t of the keys 14 on the second end side with respect to the placement surface M1.

According to the structure of the calculator 1, when the calculator 1 is used with the right hand of the user (right-handed user), the touch surfaces 141t of the keys 14 fit the hand and fingers of the user. Thus, the calculator 1 is easy to use and causes less fatigue to the user.

The calculator 1 may be configured such that the height of the casing surface 11a of the key input section 11 from the placement surface M1 (board 40) decreases from the second end side toward the first end side, namely such that the casing surface 11a slopes to the left, on the assumption that the calculator 1 is used with the left hand of the user (left-handed user). That is, the height of at least part of the touch surfaces 141t of the keys 14 on the second end side is higher than the height of at least part of the touch surface 141t of the keys 14 on the first end side with respect to the placement surface M1.

On the other hand, regarding the display 16 of the display section 12, the height of the first end side of the display screen from the placement surface M1 is not higher than the height of the second end side thereof. In the example shown in FIG.2, the first end side and the second end side of the display section 12 are at the same height from the placement surface M1.

As shown in FIG.3, the casing of the calculator 1 is bended at the boundary between the key input section 11 and the display section 12 such that the upper side of the top casing surface is raised. That is, the casing surface 12a including the display section 12 leans to the casing surface 11a including the key input section 11 at a predetermined tilt angle in the +Z direction. Since the casing surface 12a including the display section 12 leans in the column direction, the viewability of the display screen of the display 16 is increased.

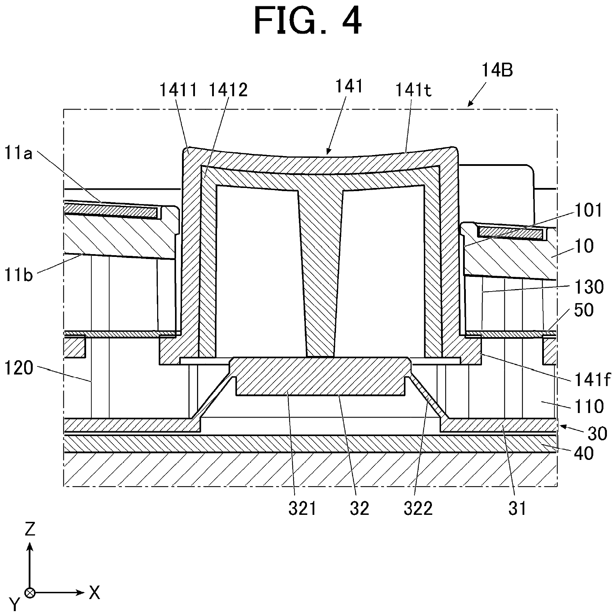

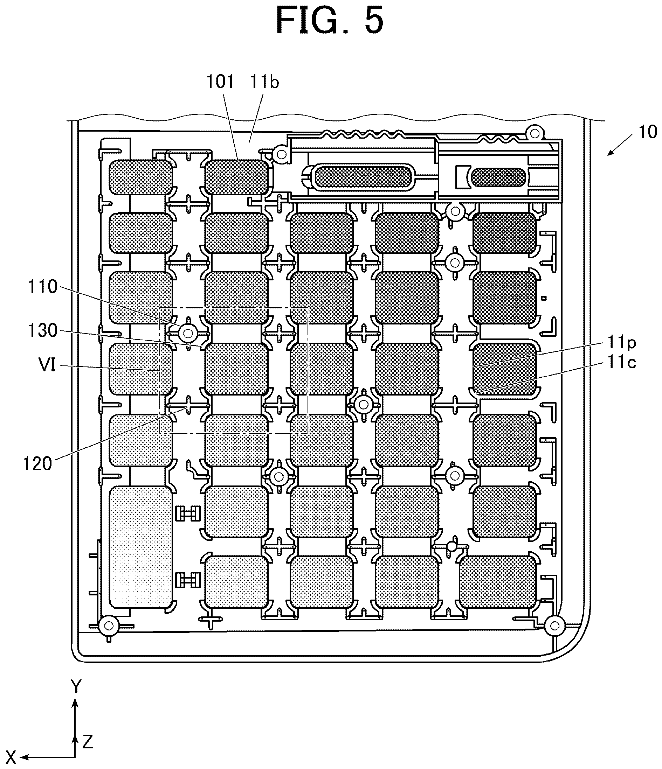

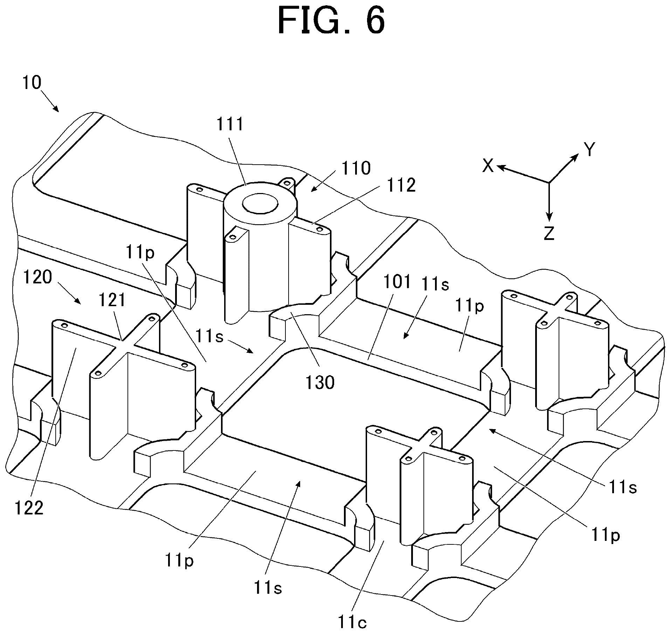

The internal configuration of the calculator 1 is described with reference to FIG.4 to FIG.6. FIG.4 is an enlarged cross-sectional view of the key 14B in FIG.2. FIG.5 shows the back surface of the top casing 10. FIG.6 is an enlarged perspective view of the region VI on the back surface side of the top casing 10.

As shown in FIG.1 to FIG.4, in the casing (the top casing 10 and the bottom casing 20), the calculator 1 includes the display 16, the solar panel 17, the key tops 141, rubber keys 30 as an elastic member, the board 40, and a nonwoven fabric sheet 50 as a sheet member. The key tops 141 each consist of a base part 1411 and a key-marking part 1412. The base part 1411 is an outside layer of the key top 141. The base part 1411 is made of resin in the background color of letters (key markings) on the touch surface 141t. The key-marking part 1412 is an inside layer of the key top 141. The key-marking part 1411 is made of resin in the color of letters on the touch surface 141t. The key-marking part 1412 is exposed on the touch surface 141t through the base part 1411 to show a letter (key marking). The background color is different from the letter color.

The key top 141 is formed of the base part 1411 and the key-marking part 1412 by two-color molding. By the two-color molding, the letters (key markings) on the touch surfaces 141t are prevented from fading even if the touch surfaces 141t are physically worn by the pressing of the user. The key top 141 may not include the key-marking part 1412 and may be formed by single-color molding.

The key top 141 includes the touch surface 141t and a flange 141f. The key top 141 is arranged such that the touch surface 141t is parallel to the flat surface of the board 40. The flange 141f is a flange-shaped edge part that protrudes in the direction of a plane parallel to the surface of the board 40. After the key top 141 is pressed by the user and moved (stroked) in the direction perpendicular to the board 40, the key top 141 returns in the reverse direction. When the key top 141 returns, the flange 141f abuts the top casing 10 (the base plate 40-side end of wall parts 130 to be described later) with the nonwoven fabric sheet 50 inbetween. The flange 141f thus stops the key top 141.

The rubber key 30 is a substantially plate-shaped member made of elastic material, such as rubber. The rubber key 30 includes a flat surface part 31 and multiple rubber key tops 32. The flat surface part 31 is a flat-shaped base body of the rubber key 30 and is placed on the flat surface of the board 40. The rubber key tops 32 are arranged at positions corresponding to the key tops 141 over the flat surface of the board 40. The rubber key tops 32 are substantially dome-shaped spring parts that receive the pressed key tops 141. The keys 14 each include the key top 141 and the corresponding rubber key top 32.

As shown in FIG.4, the rubber key top 32 includes a connecting part 321 and a support part 322. The connecting part 321 is connected to the bottom end of the key-marking part 1412 of the key top 141. The connecting part 321 receives the pressed key top 141. The support part 322 is connected to the flat surface part 31 and supports the connecting part 321 such that the connecting part 321 is at a predetermined distance from the flat surface of the board 40 in the direction perpendicular to the flat surface of the board 40 toward the top surface. In a case where the key top 141 does not include the key-marking part 1412, the connecting part 321 may be connected to the bottom of the key top 141 instead of the bottom of the key-marking part 1412.

The connecting part 321 of the rubber key top 32 is connected to the corresponding key top 141 such that the moving direction (keystroke direction) of the key top 141 is perpendicular to the flat surface of the board 40.

In a normal state, the support part 322 holds the connecting part 321 at a distance from the board 40 so that the key top 141, which is mounted on the connecting part 321, is movable when being pressed. When the key top 141 is pressed, the connecting part 321 is pressed until being in contact with the board 40. The bottom of the connecting part 321 is provided with a conductive member. When the connecting part 321 is pressed down along with the key top 141, the conductive member is brought into contact with an electrode provided on the board 40 to detect the press of the key. By the contact between the conductive member of the connecting part 321 and the electrode of the board 40, electrodes corresponding to the key 14 on the board 40 are electrically connected. Thus, the press of the key 14 is input.

The rubber key tops 32 that correspond to the key tops 141 having the same-sized touch surfaces 141t are made uniform so that the key tops 141 having the same-sized touch surfaces 141t give the same operability (click feeling) when pressed. That is, the rubber key tops 32 that correspond to the key tops 141 having the same-sized touch surfaces 141t are made of the same material in the same shape and dimensions so that the rubber key tops 32 have a substantially equal amount of mass.

The click feeling refers to the feeling of the user when he/she presses the key top 141 and recognizes the restoring force (repulsive force) of the buckled or compressed rubber key top 32 made of elastic material.

The board 40 is a printed circuit board (PCB) that supports the keys 14 in the casing. On the board 40, the keys 14, circuit elements and so forth are mounted. The casing surface 11a of the top casing 10 is formed and positioned such that the casing surface 11a is parallel to the flat surface of the board 40 in the cross section along the column direction and such that the casing surface 11a slopes to the board 40 at the angle Θ1 in the cross section along the row direction.

The nonwoven fabric sheet 50 is a sheet of nonwoven fabric placed between the flanges 14f of the keys 14 and the top casing 10 (the wall parts 130 to be described later) . When the key top 141 returns to its original position by the restoring force of the rubber key top 32 after being pressed, the direct contact of the flange 141f to the top casing 10 produces a large sound. The nonwoven fabric sheet 50 prevents the direct contact of the flange 141f to the top casing 10 and absorbs the contact force, thereby reducing the contact sound (keystroke sound) generated by the returning of the key top 141. The calculator 1 may not include the nonwoven fabric sheet 50.

The structure of the top casing 10 is described with reference to FIG.5 and FIG.6. As shown in FIG.2, FIG.4 and FIG.5, the casing surface 11a of the top casing 10 has holes 101 as openings. The holes 101 are arranged to correspond to the key tops 141 of the keys 14. The key tops 141 are inserted through the holes 101, and the holes 101 guide the movement of the key tops 141 and expose the touch surfaces 141t on the top surface (substantially toward the +Z direction). The shapes of the holes 101 correspond to the shapes of the touch surfaces 141t. For example, the holes 101 have a rectangle shape with rounded four corners.

As shown in FIG.5 and FIG.6, the top casing 10 includes boss parts 110, rib parts 120, and wall parts 130 as one body on a casing surface 11b. The boss parts 110 and the rib parts 120 serve as rib parts. The casing surface 11b is the back side (the -Z direction side) of the casing surface 11a. The boss parts 110, the rib parts 120, and the wall parts 130 are provided at crossing regions 11c, not at key pitch regions 11p. The key pitch regions 11p are side regions between the adjacent holes 101 in the X-axis direction or the Y-axis direction. The crossing regions 11c are regions each including a crossing region (intersection) where the extended regions of the key pitch regions 11p are crossed.

The boss parts 110 are internal screw parts for screwing the board 40 or the bottom casing 20 to the top casing 10 with not-illustrated external screws. The boss parts 110 each include a boss 111 and ribs 112. The boss 111 extends from the casing surface 11b in the direction perpendicular to the flat surface of the board 40. There are relatively low bosses 11 to be screwed to the board 40 and relatively high bosses 111 to be screwed to the bottom casing 20. The ribs 112 are flat-surface ribs connected to the boss 111 in the radial direction from the axis of the boss 111. The boss part 110 has one boss 111 and four ribs 112 attached to the boss 111, for example, and the ribs 112 form a cross shape when viewed from the back side.

The ribs 112 are arranged to hold the rubber key 30 between the ribs 112 and the board 40. The ribs 112 have a function of reinforcing the boss 111 to prevent the boss 111 from falling and a function of holding and fixing the rubber key 30 between the ribs 112 and the board 40.

The rib parts 120 each include a support 121 and ribs 122. The axis of the support 121 extends from the casing surface 11b in the direction perpendicular to the flat surface of the board 40. There are relatively low supports 121 that correspond to the flat surface of the rubber key 30 and relatively high supports 121 that extend beyond the flat surface of the rubber key 30 to position the rubber key 30 against the board 40. The ribs 122 are flat-surface ribs connected to the support 121 in the radial direction from the axis of the support 121. The rib part 120 has one support 121 and four ribs 122 attached to the support 121, and the ribs 122 form a cross shape when viewed from the back side, for example.

The ribs 122 are arranged to fix the rubber key 30 or to hold the rubber key 30 between the ribs 122 and the board 40. Thus, the ribs 122 have a function of fixing the rubber key 30 or holding and fixing the rubber key 30 between the ribs 122 and the board 40.

Either a boss part 110 or a rib part 120 is placed on each of the crossing regions 11c on the top casing 10. The positions and the number of boss parts 110 and rib parts 120 (the ratio between the boss parts 110 and the rib parts 120) is appropriately determined in consideration of the shapes and weight balance of the components of the calculator 1, weight saving of the calculator 1, and secure fastening of the casing.

The wall parts 130 are arranged on the crossing regions 11c so as to correspond to the four corners of the adjacent holes 101. The wall parts 130 extend from the casing surface 11b in the direction perpendicular to the flat surface of the board 40. The wall parts 130 each include a round wall-shaped edge portion, for example. The wall parts 130 are separate from each other and extend from the edges of the holes 101 in the direction perpendicular to the board 40. At the edge of each of the holes 101, the top casing 10 includes a space region 11s between the wall parts 130, which are separate from each other. For example, the top casing 10 includes the space region 11s between a wall part 130 located at the first end side and the third end side and a wall part 130 located at the second end side and the third end side. Similarly, the top casing 10 includes the space region 11s between a wall part 130 located at the first end side and the third side end and a wall part 130 located at the first end side and the fourth end side. Similarly, the top casing 10 includes a space region 11s between a wall part 130 located at the first end side and the fourth end side and a wall part 130 located at the second end side and the fourth end side. Similarly, the top casing 10 includes a space region 11s between a wall part 130 located at the second end side and the third side end and a wall part 130 located at the second end side and the fourth end side. The space regions 11s are each located between adjacent holes 101 (the key tops 141 inserted in the adjacent holes 101) in the row direction or in the column direction. That is, the space regions 11s are each located in the key pitch region 11p.

The wall parts 130 are arranged to hold the nonwoven fabric sheet 50 between the wall parts 130 and the flanges 141f. As shown in FIG.2 and FIG.4, regarding one hole 101 in the row direction, the height of the first end side edge of the hole 101 from the flat surface of the board 40 is higher than the height of the second end side edge of the hole 101 from the flat surface of the board 40. Regarding multiple holes 101 in the row direction, the height of the first end side edge of the hole 101 from the flat surface of the board 40 is higher than the height of the second end side edge of the hole 101 from the flat surface of the board 40. As shown in FIG.3, regarding one hole 101 or multiple holes 101 in the column direction, the height of the third end side edge of the hole 101 from the flat surface of the board 40 is substantially equal to the height of the fourth end side edge of the hole 101 from the flat surface of the board 40. As shown in FIG.2 to FIG.4, the distance between the flat surface of the board 40 and each of the board 40-side ends of the ribs 130 is substantially uniform in the row direction and the column direction.

On the first end side of the top casing 10, the heights of the wall parts 130 (the lengths of the wall parts 130 in the direction perpendicular to the board 40) are substantially uniform. The height of a wall part 130 is defined between the edge of the hole 101 and the board 40-side end of the wall part 130. Thus, in an identical column between the first end and the second end, the heights of the wall parts 130, which are defined between the edges of the hole 101 and the board 40-side ends of the wall parts 130, are substantially uniform. Further, the heights of the wall parts 130 formed on the second end side of the top casing 10 are lower than the heights of the wall parts 130 formed on the first end side. Thus, in an identical row, the heights of the wall parts 130 on the top casing 10 decrease from the first end side toward the second end side.

The wall parts 130 are configured to guide the key tops 141 in the moving direction (keystroke direction) when the key tops 141 are pressed. The lateral surface of each key top 141 faces the inner lateral surface of the corresponding hole 101 and the corresponding wall parts 130 with a narrow gap inbetween. In this embodiment, the lateral surface of the key top 141 is at a predetermined angle (e.g., 1.5 degrees) to the inner lateral surface of the hole 101 and the wall parts 130. However, the lateral surface of the key top 141 may be substantially parallel to the inner lateral surface of the hole 101 and the wall parts 130. The wall parts 130 are configured to receive the flange 141f with the nonwoven fabric sheet 50 inbetween when the pressed key top 141 returns. The wall parts 130 extend from the holes 101 in the moving direction (keystroke direction) of the key tops 141. Within the range of the narrow gap, the wall parts 130 restrain the key tops 141 from wobbling when the key tops 141 are stroked.

A known calculator has rib parts similar to the wall parts 130 in key-pitch regions (e.g., key-pitch regions extending in the column direction) as well as in crossing regions. According to such a known calculator, the contact area between the rib parts and the key top 141 when the pressed key top 141 returns is relatively large. According to the present disclosure, the wall parts 130 are formed only on the crossing regions 11c and not formed on the key pitch regions 11p. Therefore, the contact area between the wall parts 130 and the key top 141 when the pressed key top 141 returns is relatively small. Further, the top casing 10 does not have members that contribute to sound reflection, such as rib parts formed on the key pitch regions 11p. Therefore, the stroke sound of the key tops 141 is reduced as compared with the known calculator. Reduction of the keystroke sound means that the volume and pitch of the keystroke sound does not disturb the user.

On the cross section along the row direction in FIG.2, the keys 14 arranged in the row direction from the first end side toward the second end side are referred to as a key 14A, a key 14B, a key 14C, a key 14D, and a key 14E in order. The touch surfaces 141t of the key tops 141 of the keys 14A to 14E are substantially at the same height from the casing surface 11a in the +Z direction. By the angle Θ1, the heights of the touch surfaces 141t of the key tops 141 of the keys 14A to 14E from the flat surface of the board 40 are as follows: key 14A > key 14B > key 14C > key 14D > key 14E.

In the row direction, the difference in heights of the touch surfaces 141t of the key tops 141 of two adjacent keys 14 from the board 40 is substantially the same. In the row direction, the heights of the key tops 141 themselves of the keys 14 in the vertical direction from the flat surface of the board 40 are as follows: key 14A > key 14B > key 14C > key 14D > key 14E. Thus, the heights of the touch surfaces 141t of the keys 14 from the flat surface of the board 40 change stepwise in the row direction, depending on the angle Θ1 of the casing surface 11a.

As shown in FIG.2 and FIG.3, the touch surfaces 141t of the key tops 141 are formed to be parallel to the flat surface of the board 40. In the row direction in FIG.2, the key tops 141 of the keys 14A to 14E have the same moving length (keystroke length), which is determined by the movable range of the rubber key tops 32 and the wall parts 130. The rubber key tops 32 of the respective keys 14A to 14E have a common structure (the same structure) made of the same material in the same shape (mass). Therefore, the keys 14A to 14E provide substantially the same touch feeling, and the difference in keystroke sound among the keys 14 is reduced.

In the cross section in the column direction in FIG.3, the keys 14 arranged from the fourth end side to the third end side are referred to as a key 14F, a key 14G, a key 14H, a key 141, a key 14J, and a key 14K in order. By the angle θ2, the heights of the touch surfaces 141t of the key tops 141 of the keys 14F to 14K from the placement surface M1 are as follows: key 14K > key 14J > key 141 > key H > key 14G > key 14F.

The heights of the touch surfaces 141t of the key tops 141 of the keys 14F to 14K from the casing surface 11a are substantially uniform. Further, the heights of the key tops 141 themselves of the keys 14F to 14K in the +Z direction are substantially uniform. Therefore, in the column direction, the heights of the touch surfaces 141t of the keys 14F to 14K from the flat surface of the board 40 are substantially the same regardless of the angle θ2. Further, the wall parts 130 corresponding to the key tops 141 of the respective keys 14F to 14K are substantially at the same height from the flat surface of the board 40 in the +Z direction.

The key tops 141 of the keys 14F to 14K have the same moving length (keystroke length), which is determined by the movable range of the rubber key tops 32 and the wall parts 130. The rubber key tops 32 of the keys 14F to 14K have a common structure (the same structure) made of the same material in the same shape (mass). Therefore, in the column direction, the keys 14F to 14K provide substantially the same touch feeling, and the difference in keystroke sound among the keys 14 is substantially the same.

As described above, according to the embodiment, the calculator 1 includes a key 14, a top casing 10, and wall parts 130. The top casing 10 has a hole 101 through which the key 14 is movably inserted. The wall parts 130 are separate from each other, and each of the wall parts 130 extends from the edge of the hole 101 of the top casing 10 in the direction perpendicular to the board 40 of the calculator 1.

With such wall parts 130, the contact area between the key top 141 and the top casing 10 is reduced, and the keystroke sound of the key top 141 is reduced, as compared with a known calculator.

Further, the calculator 1 includes a space region 11s between the wall parts 130 on the top casing 10. The top casing 10 has multiple holes 101. The space region 11s is located between adjacent keys 14 in the row direction or the column direction. With such wall parts 130, the contact area between the top casing 10 and the key tops 141 is reduced as compared with a known calculator, and the keystroke sound of the key tops 141 is reduced as compared with a known calculator, and the material cost for the top casing 10 is reduced.

Further, the key 14 includes a flange 141f. The flange 141f is configured to be in contact with the board 40-side ends of the wall parts 130 when the pressed key top 141 returns. With such a flange 141f and wall parts 130, the contact area between the top casing 10 and the key tops 141 is reduced, and the keystroke sound of the key tops 141 is reduced, as compared with a known calculator.

Further, the height of a wall part 130 is defined between the edge of the hole 101 and the board 40-side end of the wall part 130; the heights of the wall parts 130 formed on the first end side of the top casing 10 are substantially uniform (substantially the same); and the heights of the wall parts 130 formed on the second end side, which is opposite the first end side, of the top casing 10 are lower than the heights of the wall parts 130 formed on the first end side. Therefore, according to the calculator 1, the heights of the touch surfaces 141t of the key tops 141 on the first end side from the board 40 are higher than the heights of the touch surfaces 141t of the key tops 141 on the second end side from the board 40. Further, the keystroke sound of the key tops 141 on the first end side and the second end side is reduced, and the difference in the keystroke sound between the first end side and second end sides is reduced.

Further, the heights of the touch surfaces 141t of the keys 14 from the board 40 on the first end side are higher than the heights of the touch surfaces 141t of the keys 14 from the board 40 on the second end side. Therefore, the key tops 141 of the calculator 1 fit the hand and fingers of the user better than a known calculator.

Further, the calculator 1 includes a nonwoven fabric sheet 50 placed between the board 40 and the rib parts 130. With the nonwoven fabric sheet 50, the impact of the returning key tops 141 on the rib parts 130 is reduced, and the keystroke sound of the returning key tops 141 is reduced as compared with a known calculator. Since the calculator 1 is configured such that the distance between the board 40 and each of the board 40-side ends of the rib parts 130 is substantially uniform, one sheet of the nonwoven fabric sheet 50 can reduce the difference in the keystroke sound of the returning key tops 141, as compared with a known calculator.

Further, the calculator 1 includes a rubber key 30 configured to restore its shape after receiving the pressed key 14; and boss parts 110 and rib parts 120 that hold the rubber key 30 between the board 40 and the boss parts 110 and the rib parts 120. With the boss parts 110 and the rib parts 120, the rubber key 30 is precisely and appropriately fixed against the board 40.

The above-described embodiment is an example of the key input device according to the present disclosure and is not intended to limit the present disclosure.

For example, although the electronic device is the calculator 1 in the above embodiment, the electronic device is not limited to a calculator. The electronic device may be a device other than a calculator that has multiple keys arranged stepwise and that is used with one hand of the user for key inputs, for example. More specifically, the electronic device may be a remote controller of various kinds of devices, a handy terminal, an external numeric keypad for a personal computer (PC), and a device for inputting PIN numbers, for example.

Although an embodiment of the present disclosure has been described, the scope of the present invention is not limited to the embodiment described above but encompasses the scope of the disclosure recited in the claims and the equivalent thereof.

## Claims

1. A key input device comprising:
a key (14);
a member (10, 20) having a hole (101) through which the key (14) is movably inserted; and
wall parts (130) separate from each other and extending from an edge of the hole (101) of the member in a direction perpendicular to a board (40) of the device.

2. The key input device according to claim 1, further comprising a space region (11s) between the wall parts (130) on the member (10).

3. The key input device according to claim 2, wherein
the member (10) has multiple holes (101) each of which is the hole;
the key (14) includes multiple keys; and
the space region (11s) is located between adjacent keys among the keys.

4. The key input device according to claim 1, wherein
the key (14) includes a flange (141f) configured to be in contact with board-side ends of the wall parts (130).

5. The key input device according to any one of claims 1 to 4, wherein
the member (10) has a first end side and a second end side opposite the first end side;
a height of each of the wall parts (130) is defined between the edge of the hole (101) and a board-side end of the wall part;
heights of the wall parts formed on the first end side are substantially uniform; and
heights of the wall parts formed on the second end side are lower than the heights of the wall parts formed on the first end side.

6. The key input device according to claim 5, wherein
the key (14) includes multiple keys; and
among the keys, a height of a touch surface (141t) of a key on the first end side from the board (40) is higher than a height of a touch surface of a key on the second end side from the board.

7. The key input device according to claim 5, further comprising a sheet member (50) placed between the board (40) and the wall parts (130).

8. The key input device according to claim 1, further comprising:
an elastic member (30) configured to restore its shape after receiving the pressed key (14); and
rib parts (110, 120) that hold the elastic member between the board (40) and the rib parts.
